(19) Europäisches Patentamt
European Patent Office
Office européen des brevets

(11) Veröffentlichungsnummer: **0 226 015**
**B1**

(12) # EUROPÄISCHE PATENTSCHRIFT

(45) Veröffentlichungstag der Patentschrift: **23.08.89**

(51) Int. Cl.⁴: **C09D 3/00**, C23C 18/42, C09D 5/38

(21) Anmeldenummer: **86115238.7**

(22) Anmeldetag: **04.11.86**

(54) **Poliergoldpräparat.**

(30) Priorität: **14.12.85 DE 3544339**

(43) Veröffentlichungstag der Anmeldung: **24.06.87 Patentblatt 87/26**

(45) Bekanntmachung des Hinweises auf die Patenterteilung: **23.08.89 Patentblatt 89/34**

(84) Benannte Vertragsstaaten: **AT BE CH DE ES FR GB IT LI LU NL**

(56) Entgegenhaltungen:
**DE-A-1 771 573**
**DE-A-3 217 049**

**H. KITTEL "Lehrbuch der Lacke und Beschichtungen", Band iii, 1976, Verlag W.A. Colom in der H. Heenemann GmbH**

(73) Patentinhaber: **Degussa Aktiengesellschaft, Weissfrauenstrasse 9, D-6000 Frankfurt am Main 1(DE)**

(72) Erfinder: **Lotze, M., Dr., Am Galgenberg 18, D-6451 Hammersbach(DE)**
Erfinder: **Frembs, D., Dr., Grünaustrasse 9, D-6450 Hanau 9(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 226 015 B1**

## Beschreibung

Die Erfindung betrifft ein Poliergoldpräparat, bestehend aus einer in organischen Lösungsmitteln löslichen Goldverbindung, gegebenenfalls einem Goldpulver und/oder einer in organischen Lösungsmitteln unlöslichen Goldverbindung, einem organischen Träger, einem Flußmittel und gegebenenfalls farbbeeinflussenden Zusätzen.

Poliergoldpräparate sind seit vielen Jahren bekannt. Sie bestehen aus feinen Goldpulvern, die ganz oder teilweise durch thermisch zersetzbare organische Goldverbindungen ersetzt sein können, einem Flußmittel und einem organischen Träger. Außerdem können noch Bestandteile in den Präparaten enthalten sein, die die Farbe des Goldfilms beeinflussen, wie z.B. Salze und Resinate des Silbers, Palladiums, Platins oder Rhodiums.

Die Goldverbindungen in solchen Präparaten sind normalerweise Derivate von cyclischen Terpenen und Schwefel, wie z.B. Sulforesinate oder Mercaptide. Verwendet werden neuerdings meist Gold-(I)mercaptide, die wegen ihres polymeren Charakters an sich in organischen Lösungsmitteln unlöslich sind, die aber durch bestimmte Substituenten am Mercaptid in eine lösliche Form überführt werden können. Solche in organischen Lösungsmitteln lösliche Goldmercaptide sind beispielsweise in den DE-ASen 12 84 807, 12 84 808, 12 86 866 und 12 98 828 beschrieben.

Das Flußmittel enthält gewöhnlich Salze oder Resinate des Wismuts, Bleis, Bors, Siliciums, Chroms, Zinns, Kupfers u.a., bestimmt das Verhalten des Goldfilms während des Brennens, verbessert die Haftung des Goldfilms auf der Unterlage und erhöht seine Beständigkeit gegen Abrieb und korrosive Chemikalien.

Die Wahl des organischen Trägers richtet sich nach den verschiedenen Auftragmethoden des Poliergoldpräparats. Bekannte organische Träger sind beispielsweise Methyläthylketon, Cyclohexanon, Äthylacetat, Xylol, Petroläther, Terpene, Terpentinöl, Asphalte, Balsame, natürliche und synthetische Harze, einzeln oder im Gemisch (DE-ASen 12 84 807 und 12 84 808). Diese Träger können jedoch zum Teil gesundheitsschädigend sein und sind außerdem nicht wasserlöslich bzw. mit Wasser verdünnbar.

Aus der DE-OS 32 17 049 ist ein Anstrichmittel für Überglasurdekorationen bekannt, das auch mit organischen Goldverbindungen und Goldpulver versetzt werden kann. Dieses Anstrichmittel ist wasserverdünnbar und nicht gesundheitsschädigend. Es besteht aus Polyvinylpyrrolidon oder einem Gemisch aus Polyvinylpyrrolidon und wässrigem Polyäthylenoxid, gelöst in Äthylenglykol und/oder Propylenglykol und eventuell Wasser. In diesem organischen Träger sind allerdings die bekannten, an sich löslichen Goldmercaptide nicht löslich.

Es war daher Aufgabe der vorliegenden Erfindung, ein Poliergoldpräparat zu entwickeln, bestehend aus einer in organischen Lösungsmitteln löslichen Goldverbindung, gegebenenfalls einem Goldpulver und/oder einer in organischen Lösungsmitteln unlöslichen Goldverbindung, einem organischen Träger, einem Flußmittel und gegebenenfalls farbbeeinflussenden Zusätzen, bei dem der organische Träger wasserverträglich sein, nicht zu Gesundheitsschädigungen führen und die bekannten Goldmercaptide aufzulösen vermögen sollte.

Diese Aufgabe wurde erfindungsgemäß dadurch gelöst, daß als organischer Träger Gemische aus 50 bis 100 % eines oder mehrerer heterocyclischer Ketone der allgemeinen Formel

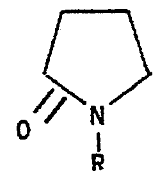

in der R einen geradkettigen oder verzweigten Alkylrest mit 1 bis 6 Kohlenstoffatomen darstellt, und 0 bis 50 % eines oder mehrerer mit Wasser verdünnbaren Kunstharze aus der Gruppe der Amin-, Phenol-, Acryl-, Alkyd- und Epoxidharze verwendet werden.

Vorzugsweise verwendet man als organischen Träger 1-Methyl-2-pyrrolidon.

Der organische Träger besteht aus einem Lösungsmittel und gegebenenfalls einem zusätzlichen Bindemittel. Als Lösungsmittel werden N-substituierte 2-Pyrrolidone eingesetzt. Der Substituent stellt einen gradkettigen oder verzweigten Alkylrest mit 1 bis 6 Kohlenstoffatomen dar. Bevorzugtes Lösungsmittel ist das 1-Methyl-2-pyrrolidon, das in der Farb- und Polymerindustrie häufig verwendet wird. Sein Löslichkeitsparameter liegt innerhalb des Bereiches einer großen Anzahl von Polymerisaten. Es ist mit Wasser und den meisten organischen Lösungsmitteln mischbar. Es wurde gefunden, daß es ferner ein ausgezeichnetes Lösevermögen für insbesondere Gold-sek.-alkylmercaptide und Goldsulforesinate besitzt. Das Lösungs mittel ist mit 50 bis 100 Gewichtsprozenten Bestandteil des Trägersystems. Nur Lösungsmittel in Form von N-substituierten 2-Pyrrolidonen verwendet man dann, wenn das Poliergoldpräparat mindestens 3, vorteilhafterweise 5 Gewichtsprozente Gold in Form des löslichen Sulforesinats enthält. Sein gutes Lösevermögen sowie seine dispergierende Wirkung auf die Feststoffanteile ermöglichen eine streifenfreie Applikation der Poliergoldpräparate per Pinsel.

In Kombination mit 1-Methyl-2-pyrrolidon sind eine Vielzahl von wasserverdünnbaren Polymerisaten als Bindemittel geeignet. Die wichtigsten sind: Polyvinylpyrrolidon, Copolymerisate aus Vinylpyrrolidon-Vinylacetat; Vinylpyrrolidon-Styrol; Polyvinylalkohol; Polyvinylacetat; Polyäthylenglykol; Polypropylenglykol; Coplymerisate aus Äthylenglykol-Propylenglykol; Copolymerisate aus Äthylen-Maleinsäure, Methylvinylether-Maleinsäure, Styrol-Maleinsäure und Styrol-Maleinsäuremonoester. Als Bindemittel werden handelsübliche Kunstharze eingesetzt, die sich entweder unmittelbar oder nach Zugabe von Säuren oder Basen mit Wasser verdünnen lassen. Es handelt sich bei diesen Kunstharzen um wasserverdünnbare Amin-, Phenol-, Alkyd-, Acryl- und Epoxidharze, die an der Luft nach einem oxydativen und/oder vernetzenden Prinzip trocknen.

Beispiele für Aminharze sind voll oder partiell methylverätherte Melamin- oder Harnstoff-Formaldehydkondensate, die lösungsmittelfrei, lösungsmittelarm oder in wasserverdünnter Form handelsüblich sind. Bei den mono- oder niedermolekularen Typen wie z.B. beim Hexamethoxymethylmelamin empfiehlt sich der Zusatz eines sauren Katalysators wie beispielsweise Salzsäure, Phosphorsäure, p-Toluolsulfonsäure oder Maleinsäure in einer Konzentration von 1 bis 8 Gewichts-%, bezogen auf den Fest stoffanteil des Bindemittels. Die Aminharze können als Alleinbindemittel oder in Kombination mit Komplementärharzen wie Acryl-, Alkyd- und Epoxidharzen eingesetzt werden. Zur Steuerung der Trocknungsgeschwindigkeit kann ein saurer Katalysator zugesetzt werden. Diese Bindemittelgemische setzen sich vorteilhafterweise aus 10 bis 20 Gewichts-% Aminharz und 80 bis 90 Gewichts-% Komplementarharz zusammen. Beispiel für oxydativ trocknende, wasserverdünnbare Harze sind Alkydharze auf Basis ungesättigter Säuren, wie z.B. Fettsäuren, mit einem Ölgehalt von 20 bis 70 Gewichts-%, ferner Epoxidester auf Basis ungesättigter Säuren, wie z.B. Leinöl-Holzöl-Epoxidester.

Der Bindemittelgehalt im Trägersystem beträgt 0 bis 50 Gewichts-%. Das Trägersystem kann Wasser bis zu einer Konzentration von 20 Gewichts-% und andere wassermischbare Lösungsmittel wie beispielsweise Alkohole, Glykole und Glykolether in einer maximalen Konzentration bis zu 40 Gewichts-% enthalten.

Zur Variation des Goldtons können diesen Präparaten Silber-, Palladium- oder Platinverbindungen zugesetzt werden. Vorzugsweise verwendet man Rhodium(III)-chlorid.

Im folgenden werden einige beispielhafte Zusammensetzungen von erfindungsgemäßen Poliergoldpräparaten angegeben:

1. 51,75 Gewichts-% Goldsulforesinat, gelöst in 1-Methyl-2-pyrrolidon (7,7 Gewichts-% Au)
24,00 Gewichts-% Goldpulver (Teilchengröße:0,5-1,0 µm)
5,00 Gewichts-% Gold(III)sulfid (80 Gewichts-% Au)
4,00 Gewichts-% Silberpulver (Teilchengröße: 0,5-1,0 µm)
0,50 Gewichts-% Wismutsubnitrat
0,25 Gewichts-% Rhodium(III)chlorid
1,80 Gewichts-% Melamin-Formaldehydharz, 75 Gewichts-% gelöst in Wasser
12,70 Gewichts-% Alkydharz (Ölgehalt 45 Gewichts-%; neutralisierte Form), 65 Gewichts-% in Glykoläther
Das Goldsulforesinat (50 Gewichts-% Au) wird in 1-Methyl-2-pyrrolidon vorgelöst und mit den übrigen Komponenten 48 Stunden in einer Kugelmühle gemischt.

2. 65,35 Gewichts-% Goldsulforesinat, gelöst in 1-Methyl-2-pyrrolidon
(15,3 Gewichts-% Au)
8,00 Gewichts-% Goldpulver (0,5-1,0 µm)
2,00 Gewichts-% Silberpulver (0,5-1,0 µm)
24,00 Gewichts-% Leinöl-Holzöl-Epoxidester (Säurezahl 40-50), 70 Gewichts-% in Glykoläther
0,50 Gewichts-% Wismutsubnitrat
0,15 Gewichts-% Rhodium(III)chlorid

3. 92,35 Gewichts-% Goldsulforesinat, gelöst in 1-Methyl-2-pyrrolidon (17,3 Gewichts-% Au)
5,00 Gewichts-% Goldpulver (0,5-1,0 µm)
2,00 Gewichts-% Silberpulver (0,5-1,0 µm)
0,50 Gewichts-% Wismutsubnitrat
0,15 Gewichts-% Rhodium(III)chlorid
Alle 3 Poliergoldpräparate sind für einen Pinselauftrag geeignet.

## Patentansprüche

1. Poliergoldpräparat, bestehend aus einer in organischen Lösungsmitteln löslichen Goldverbindung, gegebenenfalls einem Goldpulver und/oder einer in organischen Lösungsmitteln unlöslichen Goldverbindung, einem organischen Träger, einem Flußmittel und gegebenenfalls farbbeeinflussenden Zusätzen, dadurch gekennzeichnet,
daß als organischer Träger Gemische aus 50 bis 100% eines oder mehrerer heterocyclischer Ketone der allgemeinen Formel

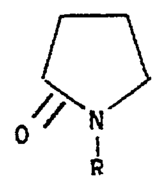

in der R einen geradkettigen oder verzweigten Alkylrest mit 1 bis 6 Kohlenstoffatomen darstellt, und 0 bis 50 % eines oder mehrerer mit Wasser verdünnbarer Kunstharze aus der Gruppe der Amin-, Phenol-, Acryl-, Alkyd- und Epoxidharze verwendet werden.

2. Poliergoldpräparat nach Anspruch 1, dadurch gekennzeichnet,
daß es als organischen Träger 1-Methyl-2-pyrrolidon enthält.

## Claims

1. A polishing gold preparation consisting of a gold compound soluble in organic solvents, optionally a gold powder and/or a gold compound insoluble in organic solvents, an organic carrier, a flux and optionally color-regulating additives, characterized in that mixtures of 50 to 100% of one or more heterocyclic ketones corresponding to the following general formula

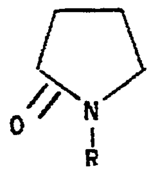

in which
R is a linear or branched $C_1$–$C_6$ alkyl radical, and 0 to 50% of one or more water-dilutable synthetic resins from the group of amine, phenolic, acrylate, alkyd and epoxy resins are used as the organic carrier.

2. A polishing gold preparation as claimed in claim 1, characterized in that it contains 1-methyl-2-pyrrolidone as carrier.

## Revendications

1. Préparation d'or à polir composée d'un composé d'or soluble dans les solvants organiques, le cas échéant d'une poudre d'or et/ou d'un composé d'or insoluble dans un solvant organique, d'un support organique, un agent fondant et le cas échéant des additifs qui influencent les couleurs, caractérisée en ce que l'on utilise comme support organique des mélanges de 50 à 100% constitués par une ou plusieurs cétones hétérocycliques de formule générale

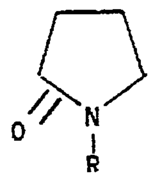

dans laquelle R représente un radical alcoyle à chaîne droite ou ramifiée ayant de 1 à 6 atomes de carbone et de 0 à 50% d'un ou plusieurs résines artificielles que l'on peut diluer à l'eau, choisies dans le groupe constitué par les résines aminées, phénoliques, acryliques, alkyde et époxy.

2. Une préparation d'or à polir selon la revendication 1, caractérisée en ce qu'elle contient comme support organique la 1-méthyl-pyrolidone-2.